# EUROPÄISCHE PATENTANMELDUNG

(11) **EP 0 924 226 A1**
(43) Veröffentlichungstag der Anmeldung: **23.06.1999**
(21) Anmeldenummer: 98120900.0
(22) Anmeldetag: 04.11.1998
(51) Int. Cl.: C08F 10/00, C08F 4/642

(54) **Polymerisationsverfahren mit einem zersetzungsunempfindlichen Metallocenkatalysator**

(30) Priorität: 18.12.1997 DE 19756265
(71) Anmelder: TARGOR GmbH, 55116 Mainz (DE)
(72) Erfinder: Süling, Carsten Dr., 67227 Frankenthal (DE); Bidell, Wolfgang Dr., 67112 Mutterstadt (DE); Lutringshauser, Manfred, 67227 Frankenthal (DE); Moll, Ulrich Dr., 67487 St Martin (DE); Hingmann, Roland Dr., 68526 Ladenburg (DE); Sandner, Meike, 76879 Knittelsheim (DE)

(57) **Zusammenfassung**

Verfahren zur Herstellung von Polymeren, welchen Kohlenwasserstoffe mit einer C-C-Doppelbindung oder C-C-Dreifachbindung zugrunde liegen durch Homo- oder -Copolymerisation dieser Monomeren in Gegenwart eines Katalysatorsystems enthaltend:
A) einen Metallocenkomplex
B) einen Co-Katalysator
C) gegebenfalls eine Trägersubstanz und
D) eine inerte organische Verbindung,
dadurch gekennzeichnet, daß die Komponente D) eine Kohlenwasserstoffverbindung oder Organosiliciumverbindung ist, ein Molekulargewicht von mehr als 300 g/mol hat und/oder das Gewichtsverhältnis der Summe der Komponenten A), B) und gegebenfalls C) : D) im Bereich von 3 : 1 bis 1 : 3 liegt.

## Beschreibung

Die vorliegende Erfindung betrifft ein Verfahren zur Herstellung von Polymeren, welchen Kohlenwasserstoffe mit einer C-C-Doppelbindung oder C-C-Dreifachbindung zugrunde liegen durch Homo- oder Copolymerisation dieser Monomeren in Gegenwart eines Katalysatorsystems enthaltend:
A) einen Metallocenkomplex
B) einen Co-Katalysator
C) gegebenfalls eine Trägersubstanz und
D) eine inerte organische Verbindung,
sowie ein Katalysatorsystem enthaltend:
A) einen Metallocenkomplex
B) einen Co-Katalysator
C) gegebenfalls eine Trägersubstanz und
D) eine inerte Organosiliciumverbindung
und die Verwendung von inerten Oranosiliciumverbindungen zur Herstellung von Katalysatorsystemen.

Metallocenkatalysatorsysteme setzen sich im allgemeinen aus einem Metallocenkomplex und einem Cokatalysator zusammen. Oft sind diese aktiven Bestandteile auf einer Trägersubstanz, wie einem porösen anorganischen Oxid fixiert. In den überwiegenden Fällen ist der Cokatalysator eine aluminiumorganische oder bororganische Verbindung. Diese sind für sich oder als Bestandteil des Katalysatorsystems hydrolyselabil, brennbar und häufig selbstentzündlich.

Diese Eigenschaften führen dazu, daß sich Katalysatorsysteme, welche beispielsweise die genannten Cokatalysatoren enthalten, an der Luft entzünden, schnell hydrolysieren und dadurch polymerisationsinaktiv werden.

Andererseits sind die polymerisationsaktiven Katalysatorsysteme bereits so aktiv, daß sie Monomere während der Dosierung des Katalysatorsystems in den Polymerisationsreaktor in den Katalysator-Dosierleitungen polymerisieren und so die Katalysator-Dosierleitungen mit Polymerisat verstopfen. Die hohe Aktivität der Katalysartorsysteme führt zu Störungen während des Polymerisationsverfahrens, beispielsweise durch Wandbeläge im Polymerisationsreaktor ("fouling") oder Bildung von Feinstaub, Brocken oder Platten ("sheeting") im Polymerisat.

Ein weiteres Problem der aktiven, ungeschützten Katalysatorsysteme ist, daß ihre Polymerisationsaktivität bei der Lagerung merklich zurückgeht

WO 96/34020 beschreibt ein Metallocenkatalysatorsystem, dem eine inerte Kohlenwasserstoffkomponente, allerdings nur zu 0,05 bis 15 Gew.-%, bezogen auf das Gesamtgewicht des Katalysatorsystems, zugesetzt wird. Dieses Katalysatorsystem reduziert wohl "fouling"und "sheeting" bei der Gasphasen oder Slurry-Polymerisation, läßt aber bezüglich Stabilität gegenüber Zersetzung oder Selbstentzündung und hinsichtlich seiner Lagerstabilität noch zu wünschen übrig.

EP-A 0 796 859 beschreibt wohl in Beispiel 2 eine Masse aus Metallocen, Methylalumnioxan und Weißöl, die reich an Weißöl ist, schweigt sich allerdings über Polymerisationsversuche mit dieser Masse aus.

Aufgabe der vorliegende Erfindung war es, ein Polymerisationsverfahren zur Verfügung zu stellen, in welchem ein Katalysator verwendet wird, der schwer hydrolysiert, praktisch nicht selbstentzündlich ist, während der Katalysatordosierung, also außerhalb des Polymerisationsreaktors, praktisch polymerisationsinaktiv ist und zusätzlich bei der Polymerisation im Reaktor ein Polymerisat mit guter Kornmorphologie und daher auch erhöhter Schüttdichte zugänglich macht (praktisch kein "fouling", "sheeting", Polymerstaub oder Grobkorn).

Demgemäß wurde das in den Ansprüchen definierte Verfahren, das in den Ansprüchen definierte Katalysatorsystem und die in den Ansprüchen definierte Verwendung von inerten Oranosiliciumverbindungen zur Herstellung von Katalysatorsystemen gefunden.

Die Komponente A) des Katalysatorsystems ist ein Metallocenkomplex. Hierunter sind im folgenden Übergangsmetallkomplexe, vorzugsweise jene der IV. Nebengruppe des Periodensystems der Elemente zu verstehen, welche mindestens einen Liganden enthalten, der sich vom Cyclopentadienylring ableitet oder jenen als, an das Übergangsmetall gebundene Struktureinheit, enthält. Derartige Liganden sind zum Beispiel unsubstituierte und substituierte Cyclopentadienylderivate, unsubstituierte und substituierte Indenylderivate oder unsubstituierte und substituierte Fluorenylderivate. Die Liganden können auch über sogenannte Brückenatome miteinander verbunden sein.

Gut geeignete Komponenten A) sind beispielsweise solche der allgemeinen Formel (I) 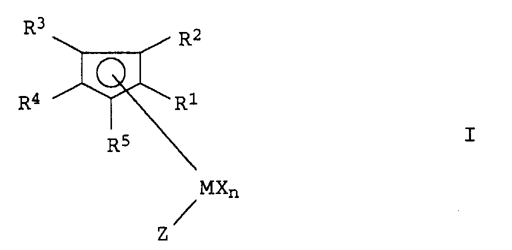 in der die Substituenten folgende Bedeutung haben:
- M: Titan, Zirkonium, Hafnium, Vanadium, Niob oder Tantal, sowie Elemente der III. Nebengruppe des Periodensystems und der Lanthanoiden,
- X: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR⁶ oder -NR⁶R⁷,
- n: eine ganze Zahl zwischen 1 und 3, wobei n der Wertigkeit von M minus der Zahl 2 entspricht,
wobei
- R⁶ und R⁷: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
- R¹ bis R⁵: Wasserstoff, C₁- bis C₁₀-Alkyl, 5- bis 7gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder Si(R⁸)₃ mit
- R⁸: C₁- bis C₁₀-Alkyl, C₃- bis C₁₀-Cycloalkyl oder C₆- bis C₁₅-Aryl,
- Z: für X oder 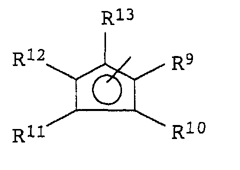 steht,
wobei die Reste
- R⁹ bis R¹³: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder Si(R¹⁴)₃ mit
- R¹⁴: C₁- bis C₁₀-Alkyl, C₆- bis C₁₅-Aryl oder C₃- bis C₁₀-Cycloalkyl,
oder wobei die Reste R⁴ und Z gemeinsam eine Gruppierung -R¹⁵-A- bilden, in der
- R¹⁵: 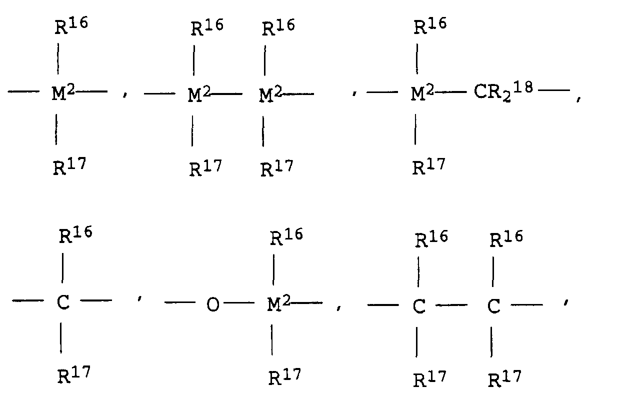 = BR¹⁶, = AlR¹⁶, -Ge-, -Sn-, -O-, -S-, = SO, = SO₂, = NR¹⁶, = CO, = PR¹⁶ oder = P(O)R¹⁶ ist,
wobei
- R¹⁶, R¹⁷ und R¹⁸: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
- M²: Silicium, Germanium oder Zinn ist,
- A: ―O―, ―S―, 〉NR¹⁹ oder 〉PR¹⁹ bedeuten, mit
- R¹⁹: C₁- bis C₁₀-Alkyl, C₆- bis C₁₅-Aryl, C₃- bis C₁₀-Cycloalkyl, Alkylaryl oder Si(R²⁰)₃,
- R²⁰: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁴ und R¹² gemeinsam eine Gruppierung -R¹⁵- bilden.

Von den Metallocenkomplexen der allgemeinen Formel I sind 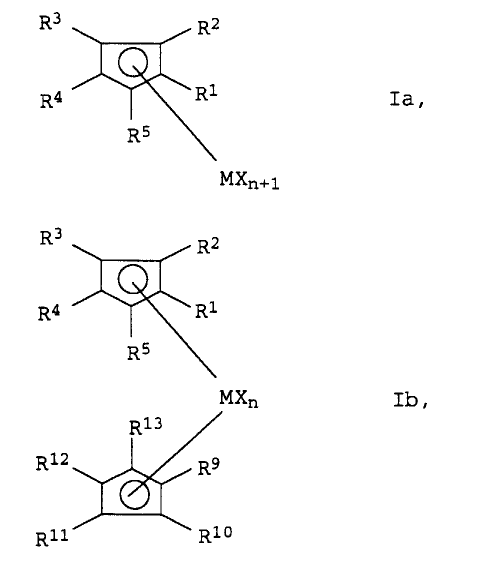 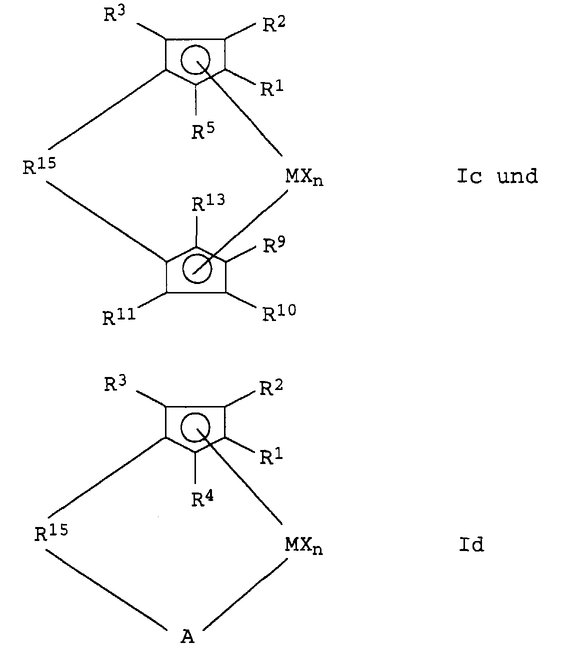 bevorzugt.

Die Reste X können gleich oder verschieden sein, bevorzugt sind sie gleich.

Von den Verbindungen der Formel Ia sind insbesondere diejenigen bevorzugt, in denen
- M: Titan, Zirkonium oder Hafnium,
- X: Chlor, C₁-bis C₄-Alkyl oder Phenyl,
- n: die Zahl 2 und
- R¹ bis R⁵: Wasserstoff oder C₁- bis C₄-Alkyl bedeuten.

Von den Verbindungen der Formel Ib sind als bevorzugt diejenigen zu nennen, bei denen
- M: für Titan, Zirkonium oder Hafnium steht,
- X: Chlor, C₁-bis C₄-Alkyl oder Phenyl,
- n: die Zahl 2,
- R¹ bis R⁵: Wasserstoff, C₁- bis C₄-Alkyl oder Si(R⁸)₃,
- R⁹ bis R¹³: Wasserstoff, C₁- bis C₄-Alkyl oder Si(R¹⁴)₃ bedeuten.

Insbesondere sind die Verbindungen der Formel Ib geeignet, in denen die Cyclopentadienylreste gleich sind.

Beispiele für besonders geeignete Verbindungen sind u.a.:
Bis(cyclopentadienyl)zirkoniumdichlorid,
Bis(pentamethylcyclopentadienyl)-zirkoniumdichlorid,
Bis(methylcyclopentadienyl)-zirkoniumdichlorid,
Bis(ethylcyclopentadienyl)-zirkoniumdichlorid,
Bis(n-butylcyclopentadienyl)-zirkoniumdichlorid und
Bis(trimethylsilylcyclopentadienyl)-zirkoniumdichlorid
sowie die entsprechenden Dimethylzirkoniumverbindungen.

Von den Verbindungen der Formel Ic sind diejenigen besonders geeignet, in denen
- R¹ und R⁹: gleich sind und für Wasserstoff oder C₁- bis C₁₀-Alkylgruppen stehen,
- R⁵ und R¹³: gleich sind und für Wasserstoff, eine Methyl-, Ethyl-, iso-Propyl- oder tert.-Butylgruppe stehen,
- R², R³, R¹⁰ und R¹¹: die Bedeutung R³ und R¹¹ C₁- bis C₄-Alkyl R² und R¹⁰ Wasserstoff haben oder zwei benachbarte Reste R² und R³ sowie R¹⁰ und R¹¹ gemeinsam für 4 bis 12 C-Atome aufweisende cyclische Gruppen stehen,
- R¹⁵: für 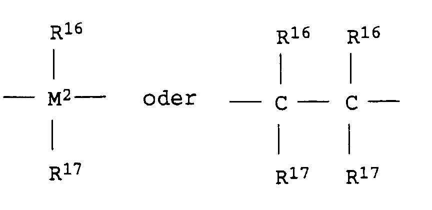 steht,
- M: für Titan, Zirkonium oder Hafnium und
- X: für Chlor, C₁- bis C₄-Alkyl oder Phenyl stehen.

Beispiele für besonders geeignete Komplexverbindungen sind u.a.
Dimethylsilandiylbis(cyclopentadienyl)-zirkoniumdichlorid,
Dimethylsilandiylbis(indenyl)-zirkoniumdichlorid,
Dimethylsilandiylbis(tetrahydroindenyl)-zirkoniumdichlorid,
Ethylenbis(cyclopentadienyl)-zirkoniumdichlorid,
Ethylenbis(indenyl)-zirkoniumdichlorid,
Ethylenbis(tetrahydroindenyl)-zirkoniumdichlorid,
Tetramethylethylen-9-fluorenylcyclopentadienylzirkoniumdichlorid,
Dimethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis(-2-methylindenyl)-zirkoniumdichlorid,
Dimethylsilandiylbis(-2-isopropylindenyl)-zirkoniumdichlorid,
Dimethylsilandiylbis(-2-tert.butylindenyl)-zirkoniumdichlorid,
Diethylsilandiylbis(-2-methylindenyl)-zirkoniumdibromid,
Dimethylsilandiylbis(-3-methyl-5-methylcyclopentadienyl)-zirkoniumdichlorid,
Dimethylsilandiylbis(-3-ethyl-5-isopropylcyclopentadienyl)-zirkoniumdichlorid,
Dimethylsilandiylbis(-2-ethylindenyl)-zirkoniumdichlorid,
Dimethylsilandiylbis(-2-methylbenzindenyl)-zirkoniumdichlorid
Dimethylsilandiylbis(2-ethylbenzindenyl)zirkoniumdichlorid,
Methylphenylsilandiylbis(2-ethylbenzindenyl)zirkoniumdichlorid,
Methylphenylsilandiylbis(2-methylbenzindenyl)zirkoniumdichlorid,
Diphenylsilandiylbis(2-methylbenzindenyl)zirkoniumdichlorid,
Diphenylsilandiylbis(2-ethylbenzindenyl)zirkoniumdichlorid, und
Diphenylsilandiylbis(-2-methylindenyl)-hafniumdichlorid
sowie die entsprechenden Dimethylzirkoniumverbindungen.

Weitere Beispiele für geeignete Komplexverbindungen sind u.a.
Dimethylsilandiylbis(-2-methyl-4-phenylindenyl)zirkoniumdichlorid,
Dimethylsilandiylbis(-2-methyl-4-naphthylindenyl)zirkoniumdichlorid,
Dimethylsilandiylbis(-2-methyl-4-isopropylindenyl)zirkoniumdichlorid und
Dimethylsilandiylbis(-2-methyl-4,6-diisopropylindenyl)zirkoniumdichlorid sowie die entsprechenden Dimethylzirkoniumverbindungen.

Bei den Verbindungen der allgemeinen Formel Id sind als besonders geeignet diejenigen zu nennen, in denen
- M: für Titan oder Zirkonium,
- X: für Chlor, C₁-bis C₄-Alkyl oder Phenyl stehen.
- R¹⁵: für 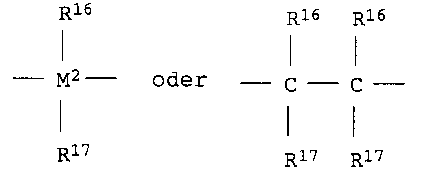 steht,
- A: für ―O―, ―S―, 〉NR¹⁹
und
- R¹ bis R³ und R⁴: für Wasserstoff, C₁- bis C₁₀-Alkyl, C₃- bis C₁₀-Cycloalkyl, C₆- bis C₁₅-Aryl oder Si(R⁸)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Die Komponente B) des Katalyatorsystems ist ein Cokatalysator, hier auch metalloceniumionenbildende Verbindung genannt.

Geeignete metalloceniumionenbildende Verbindungen sind starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel V

M³X¹X²X³ V

bevorzugt, in der
- M³: ein Element der III. Hauptgruppe des Periodensystems bedeutet, insbesondere B, Al oder Ga, vorzugsweise B,
- X¹, X² und X³: für Wasserstoff, C1- bis C10-Alkyl, C6- bis C15-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel V, in der X¹, X² und X³ gleich sind, vorzugsweise Tris(pentafluorphenyl)boran.

Als ionische Verbindungen mit lewissauren Kationen sind Verbindungen der allgemeinen Formel VI

[(Y^{a+})Q₁Q₂...Q_{z}]^{d+} VI

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₃- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 und
- z: für ganze Zahlen von 0 bis 5 steht,
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Die Menge an metalloceniumionenbildenden Verbindungen beträgt bevorzugt 0,1 bis 10 Äquivalente, bezogen auf den Metallocenkomplex IV.

Besonders geeignet als metalloceniumionenbildende Verbindung also Komponente B₎ sind offenkettige oder cyclische Alumoxanverbindungen der allgemeinen Formel II oder III 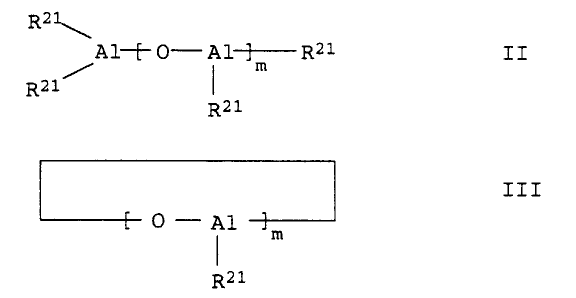
- wobei R²¹: eine C₁- bis C₄-Alkylgruppe bedeutet, bevorzugt eine Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und in US 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Weiterhin können als Komponente B₎ Aryloxyalumoxane, wie in der US 5,391,793 beschrieben, Aminoaluminoxane, wie in der US 5,371,260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.

Es hat sich als vorteilhaft erwiesen, die Metallocenkomplexe und die oligomere Alumoxanverbindung in solchen Mengen zu verwenden, daß das atomare Verhältnis zwischen Aluminium aus der oligomeren Alumoxanverbindung und dem Übergangsmetall aus den Metallocenkomplexen im Bereich von 10:1 bis 10⁶:1, insbesondere im Bereich von 10:1 bis 10⁴:1, liegt.

Die aktive Masse des Katalysatorsystems wird im allgemeinen durch Kombination der Komponenten A) und B) gebildet.

Das Katalysatorsystem kann als Komponente C) einen Träger enthalten. Vorzugsweise enthält es einen Träger C).

Geeignete Trägersubstanzen C) sind organische Polymere, vorzugsweise jedoch poröse anorganische Materialien.

Als Trägermaterialien werden vorzugsweise feinteilige Träger eingesetzt, die einen Teilchendurchmesser im Bereich von 0,1 bis 1000 µm aufweisen, bevorzugt von 10 bis 300 µm, insbesondere von 30 bis 70 µm. Geeignete organische Träger sind beispielsweise feinteilige Polymerisate, z.B. feinteiliges Polyethylen oder feinteiliges Polypropylen. Als anorganische Träger sind z.B. Aluminiumtrioxid, Siliziumdioxid, Titandioxid oder deren Mischoxide, Aluminiumphosphat oder Magnesiumchlorid geeignet. Bevorzugt kommen Kieselgele der Formel SiO₂ · a Al₂O₃ zum Einsatz, worin a für eine Zahl im Bereich von 0 bis 2, vorzugsweise 0 bis 0,5, steht. Die Trägerpartikel können in granulärer Form sowie sprühgetrocknet in mikroskopischer Form verwendet werden. Derartige Produkte sind im Handel erhältlich, z.B. Silica Gel 332 der Fa. Grace oder ES 70 X der Fa. Crosfield.

Bevorzugte anorganische Trägermaterialien sind saure, anorganische Metall- oder Halbmetall-Oxide mit sehr hoher Porosität, die zum Beispiel in der älteren Deutschen Patentanmeldung 197 20 980.7, insbesondere auf Seite 3, Zeilen 45 bis Seite 5, Zeile 11 beschrieben werden.

Die Komponente D) des Katalysatorsystems ist eine inerte organische Verbindung. Unter organischer Verbindung sind hierin auch elementorganische, insbesondere siliciumorganische Verbindungen zu verstehen. Inert bedeutet hierin, daß die Komponente D) praktisch nicht mit einer der Komponenten A), B) oder C) oder Kombinationen dieser Komponenten unter deren überwiegenden oder vollständigen Zersetzung reagiert.

Gut geignete Komponenten D) haben Molekulargewichte im Bereich von 200 bis 5000, vorzugsweise im Bereich von 300 bis 600. Bei monodispersen organischen Verbindungen berechnet sich das Molekulargewicht aus der Summenformel, bei polydispersen organischen Verbindungen, also Polymeren oder Oligomeren versteht man unter Molekulargewicht die Größe Mn, bestimmt mittels Gelpermeationschromatographie.

Als Komponente D) kommen in Frage feste und flüssige Paraffine, natürliche und synthethische Kohlenwasserstoff-Wachse, die beispielsweise in Ullmanns Enzyklopädie der Technischen Chemie, Verlag Chemie, Weinheim, 4. Aufl., 1982, beschrieben sind, oligomere Alk-1-en-Polymerisate oder niedermolekulare Homo- und Copolymere des Styrols.

Weiterhin sind Silicone mit einem Molekulargewicht Mn im Bereich von 1000 bis 15000, beispielsweise in Öl- Wachs- oder Pastenform, gut geeignet als Komponente D).

Vorzugsweise verwendet man als Komponente D) Paraffinwachs, insbesondere Paraffinwachs mit einem Schmelzpunkt im Bereich von 45 bis 90°C, beispielsweise Paraffinwachs der Firma Merck, Chemikalienkatalog 1997, weiterhin bevorzugte Komponeten D) sind Paraffinwachse der Firma Riedel-de Haen, Best.-Nr. 18636, Chemikalienkatalog 1997.

Das Gewichtsverhältnis aus der Summe der Komponenten A), B) und gegebenfalls C) : D) liegt im Bereich von 1 : 3 bis 3 : 1, vorzugsweise im Bereich von 1 : 2 bis 2 : 1 und insbesondere bei 1 : 1. Bevorzugte Katalysatoren dieser Zusammensetzungen enthalten Komponente C), insbesondere Silicagel als Komponente C).

Die Herstellung der Katalysatorsysteme geschieht üblicherweise durch Kombination der Komponenten A) bis D). Zwei Verfahrensvarianten haben sich hierfür als gut geeignet erwiesen. Bei Variante 1 werden die Komponenten A), B) und gegebenfalls C), einzeln oder in beliebiger Kombination in die geschmolzene Komponente D), vorzugsweise geschmolzenes Paraffin-Wachs eingerührt, wobei das Gewichtsverhältnis aus der Summe der Komponenten A), B), und gegebenfalls C) : D) üblicherweise im Bereich von 1 : 3 bis 3 : 1, vorzugsweise im Bereich von 1 : 2 bis 2 : 1 und insbesondere bei 1 : 1 liegt. Die Mischung wird unter Rühren abkühlen lassen, und man erhält das Katalysatorsystem als schüttbaren Grieß.

Bei Variante 2, der bevorzugten Herstellungsvariante, werden die Komponenten A), B) und gegebenfalls C), einzeln oder in beliebiger Kombination in eine Lösung der Komponete D) - vorzugsweise Paraffinwachs-Wachs - in einem organischen Lösungsmittel, wie aliphatischen, aromatischen oder Halogenkohlenwasserstoffen oder Ether, vorzugsweise Heptan, eingerührt, wobei das Gewichtsverhältnis aus der Summe der Komponenten A), B) und gegebenenfalls C) : D) üblicherweise im Bereich von 1 : 3 bis 3 : 1, vorzugsweise im Bereich von 1 : 2 bis 2 : 1 und insbesondere bei 1 : 1 liegt. Die Mischung wird unter Rühren abkühlen lassen, das Lösungsmittel während des Abkühlens oder danach verdampft und man erhält das Katalysatorsystem als schüttbaren Grieß.

Das erfindungsgemäße Polymmerisationsverfahren wird zur Polymerisation von Monomeren mit C-C-Doppelbindung oder C-C-Dreifachbindung eingesetzt. Dabei kann die C-C-Doppelbindung oder die C-C-Dreifachbindung oder beide sowohl terminal als auch innenständig, sowohl exocyclisch als auch endocyclisch angeordnet sein. Bevorzugte Monomere mit C-C-Dreifachbindung sind C2- bis C10-Alk-1-ine, wie Ethin, Propin, 1-Butin, 1-Hexin und weiterhin Phenylacetylen. Bevorzugt wird das erfindungsgemäße Polymerisationsverfahren zur Polymerisation oder Copolymerisation von C₂- bis C₁₂-Alk-1-enen eingesetzt. Als C₂- bis C₁₂-Alk-1-ene sind Ethylen, Propylen, But-1-en, Pent-1-en, 4-Methyl-pent-1-en, Hex-1-en, Hept-1-en oder Oct-1-en sowie vinylaromatische Monomere wie Styrol, p-Methylstyrol oder 2,4-Dimethylstyrol oder Gemische aus diesen C₂- bis C₁₂-Alk-1-enen bevorzugt. Besonders bevorzugt sind Homo- oder Copolymerisate des Ethylens oder des Propylens, wobei der Anteil an Ethylen oder an Propylen in den Copolymerisaten mindestens 50 Mol-% beträgt. Bei den Copolymerisaten des Ethylens sind diejenigen bevorzugt, die als weitere Monomere Propylen, But-1-en, Hex-1-en oder Oct-1-en oder deren Mischungen enthalten. Bei den Copolymerisaten des Propylens handelt es sich insbesondere um solche Copolymerisate, die als weitere Monomere Ethylen oder But-1-en oder deren Mischungen enthalten.

Vorzugsweise werden mit dem erfindungsgemäßen Polymerisationsverfahren solche Polymerisate hergestellt, die
50 bis 100 Mol-% Ethylen und
0 bis 50 Mol-%, insbesondere 0 bis 30 Mol-% C₃- bis C₁₂-Alk-1-ene
enthalten.

Bevorzugt sind auch solche Polymerisate, die
50 bis 100 Mol-% Propylen,
0 bis 50 Mol-%, insbesondere 0 bis 30 Mol-% Ethylen und
0 bis 20 Mol-%, insbesondere 0 bis 10 Mol-% C₄- bis C₁₂-Alk-1-ene
aufweisen.

Die Summe der Mol-% ergibt stets 100.

Die Polymerisation kann in den für die Polymerisation von Olefinen üblichen Verfahren, wie Lösungsverfahren, Suspensionsverfahren, gerührtes Gasphasenverfahren oder Gasphasenwirbelschichtverfahren, kontinuierlich oder auch diskontinuierlich durchgeführt werden. Als Lösungsmittel oder Suspensionsmittel können inerte Kohlenwasserstoffe, wie beispielsweise iso-Butan, oder aber die Monomeren selbst verwendet werden. Besonders gut geeignete Verfahren zur Herstellung der Polymerisate sind das Suspensionsverfahren und die Gasphasenverfahren (gerührte Gasphase, Gasphasenwirbelschicht).

Geeignete Reaktoren sind u.a. kontinuierlich betriebene Rührkessel, Schleifenreaktoren oder Wirbelbettreaktoren, wobei man gegebenenfalls auch eine Reihe von mehreren hintereinander geschalteten Reaktoren verwenden kann (Reaktorkaskade).

Die Polymerisation mit Hilfe des erfindungsgemäßen Verfahrens wird im allgemeinen bei Temperaturen im Bereich von -50 bis 300°C, vorzugsweise im Bereich von 0 bis 150°C, und bei Drücken in der Regel im Bereich von 0,5 bis 3000 bar, vorzugsweise im Bereich von 1 bis 80 bar, durchgeführt. Bei den erfindungsgemäßen Polymerisationsverfahren ist es vorteilhaft, die Verweilzeiten der jeweiligen Reaktionsgemische auf 0,5 bis 5 Stunden, insbesondere auf 0,7 bis 3,5 Stunden, einzustellen. Es können bei der Polymerisation u.a. auch Antistatika sowie Molmassenregler, beispielsweise Wasserstoff, mitverwendet werden.

Das erfindungsgemäße Polymerisationsverfahren weist mehrere Vorteile auf. Die verwendten Katalysatorsysteme zersetzen sich praktisch nicht an Luft , sind nicht selbstentzündlich und lassen sich sehr lange lagern. Das Polymerisationsverfahren liefert Polymerisat mit guter Kornmorphologie, insbesondere keine Wandbeläge im Reaktor, praktisch keinen Feinstaub oder Brocken oder Platten ("sheets"). Das Polymerisat zeichnet sich durch eine erhöhte Schüttdichte aus. Das Katalysatorsystem läßt sich leicht dosieren und führt insbesondere nicht zu Verstopfungen in der Katalyatordosierleitung. Es finden sich ferner keine Katalysatoreinschmelzungen im Polymerisat.

### Beispiele

### Beispiel 1: Katalysatorherstellung

Unter Inertgasatmosphäre wurden 20 g Paraffinwachs mit einem Schmelzpunkt von 52°C in einem 250-ml-Dreihalskolben mit KPG-Rührer vorgelegt und im Ölbad bei einer Temperatur von 60°C aufgeschmolzen. Durch kurzzeitiges Anlegen von Vakuum wurden eventuelle niedermolekulare Anteile und Feuchtigkeit entfernt. Anschließend wurden 9,8 g Metallocen-MAO-Katalysator (Kieselgel SG 332 von Grace, Dimethylsilyl-bis[2-methyl-4,5-benzoindenzyl]zirkonocendichlorid, MAO von Firma Albemarle) als Feststoff zugegeben und kräftig verrührt. Die leuchtend orange-farbene leicht viskose Masse wurde in einen zweiten Kolben mit kaltem Pentan eingetragen, wobei der fertige Katalysator als Feststoff anfiel. Es wurden etwa 20 g Katalysator erhalten. Dieser Katalysator läßt sich ohne Schutzgas gefahrlos handhaben. Ein kurzfristiger Kontakt mit Luft führt zu keinen Minderungen der Produktivität (g Polymer/g Katalysatorfeststoff).

### Beispiel 2: Propylenpolymerisation

Im Stickstoffgegenstrom wurden 100 g Polymervorlage in den Autoklav gefüllt. Bei langsamer Rührgeschwindigkeit (≈ 100 U/min) wurde der Autoklav dreimal mit je 5 bar Stickstoff gespült und aufgeheizt. Nach Erreichen einer Autoklaventemperatur von 30-40°C wurden 20 mmol Aluminiumalkyl (10 ml 2-molare Lösung in Heptan) im Stickstoffgegenstrom über den Einfüllstutzen eingefüllt und erneut gespült. Der mit Wachs überzogene Katalysator (150 mg) wurde über den Einfüllstutzen mit einem Einleitungsrohr eingefüllt. Dann wurden 7 l flüssiges Propylen in den Autoklaven gefüllt. Der Autoklav wurde auf 70-75°C Manteltemperatur aufgeheizt, die Rührerdrehzahl auf 200-250 U/min erhöht. Nach Erreichen von Solltemperatur und Solldruck wurde 90 Minuten unter Temperaturkonstanz polymerisiert. Man erhielt 0,6 kg Polypropylen mit ausgezeichneter Morphologie (keine Brocken, kein Feinstaub), was einer Produktivität von 4000 g PP/g Katalysator (Wert 1) entspricht. Da der Katalysator zu etwa 50 % aus an und für sich polymerisationsinaktivem Wachs besteht, beträgt die Produktivität etwa 8000 g PP/g (herkömmlichem) Katalysator (Wert 2). Die Schüttdichte des Polymers beträgt 490 g/l.

Der Katalysator wurde etwa 2 Monate unter den üblichen Bedingungen gelagert und dann erneut zur Polymerisation eingesetzt. Man erhielt eine Produktivität von 3800 g PP/g Katalysator (Wert 1) oder 7600 g (Wert 2), was einem Produktivitätsverlust von 5 % entspricht.

### Vergleichsbeispiel 2 (frischer Katalysator):

Im Stickstoffgegenstrom wurden 100 g Polymervorlage in den Autoklav gefüllt. Bei langsamer Rührgeschwindigkeit (≈ 100 U/min) wurde der Autoklav dreimal mit je 5 bar Stickstoff gespült und aufgeheizt. Nach Erreichen einer Autoklaventemperatur von 30-40°C wurden 20 mmol Aluminiumalkyl (10 ml 2-molare Lösung in Heptan) im Stickstoffgegenstrom über den Einfüllstutzen eingefüllt und erneut gespült. Über den Einfüllstutzen wurden 150 mg analog Beispiel 1 frisch hergestellter Katalysator (ohne Wachs) ebenfalls im Stickstoffgegenstrom mit einem Einleitungsrohr eingefüllt. Dann wurden 7 l flüssiges Propylen in den Autoklaven gefüllt. Der Autoklav wurde auf 70-75°C Manteltemperatur aufgeheizt, die Rührerdrehzahl auf 200-250 U/min erhöht. Nach Erreichen von Solltemperatur und Solldruck wurde 90 Minuten unter Temperaturkonstanz polymerisiert. Man erhielt 1,2 kg Polypropylen, was einer Produktivität von 8000 g PP/g Katalysator entspricht. Die Schüttdichte beträgt 440 g/l.

### Vergleichsbeispiel 2 (gealterter Katalysator):

Im Stickstoffgegenstrom wurden 100 g Polymervorlage in den Autoklav gefüllt. Bei langsamer Rührgeschwindigkeit (≈ 100 U/min) wurde der Autoklav dreimal mit je 5 bar Stickstoff gespült und aufgeheizt. Nach Erreichen einer Autoklaventemperatur von 30-40°C wurden 20 mmol Aluminiumalkyl (10 ml 2-molare Lösung in Heptan) im Stickstoffgegenstrom über den Einfüllstutzen eingefüllt und erneut gespült. Über den Einfüllstutzen wurden 150 mg einer etwa 2 Monate alten Katalysatorprobe aus Vergleichsbeispiel 2 (ohne Wachs) ebenfalls im Stickstoffgegenstrom mit einem Einleitungsrohr eingefüllt. Dann wurden 7 l flüssiges Propylen in den Autoklaven gefüllt. Der Autoklav wurde auf 70-75°C Manteltemperatur aufgeheizt, die Rührerdrehzahl auf 200-250 U/min erhöht. Nach Erreichen von Solltemperatur und Solldruck wurde 90 Minuten unter Temperaturkonstanz polymerisiert. Man erhielt 450 g Polypropylen, was einer Produktivität von 3000 g PP/g Katalysator entspricht. Der Produktivitätsverlust entspricht etwa 62 %. Die Morphologie des erhaltenen Polymers war nicht gut; es waren Zusammenschmelzungen zu erkennen.

## Patentansprüche

1. Verfahren zur Herstellung von Polymeren, welchen Kohlenwasserstoffe mit einer C-C-Doppelbindung oder C-C-Dreifachbindung zugrunde liegen, durch Homo- oder Copolymerisation dieser Monomeren in Gegenwart eines Katalysatorsystems enthaltend:
A) einen Metallocenkomplex
B) einen Co-Katalysator
C) gegebenfalls eine Trägersubstanz und
D) eine inerte organische Verbindung,
dadurch gekennzeichnet, daß die Komponente D) eine Kohlenwasserstoffverbindung oder Organosiliciumverbindung ist, ein Molekulargewicht von mehr als 300 g/mol hat und das Gewichtsverhältnis der Summe der Komponenten A), B) und gegebenfalls C) : D) im Bereich von 3: 1 bis 1 : 3 liegt.

2. Verfahren nach Anspruch 1, wobei die Komponente A) ein Metallocenkomplex der allgemeinen Formel (I) 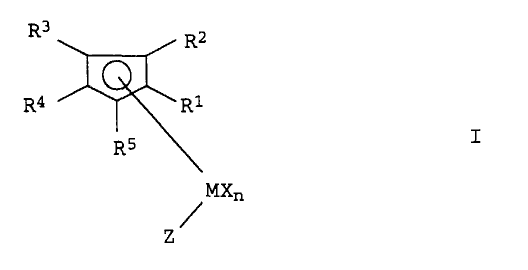 in der die Substituenten folgende Bedeutung haben:
M Titan, Zirkonium, Hafnium, Vanadium, Niob oder Tantal, sowie Elemente der III. Nebengruppe des Periodensystems und der Lanthanoiden,
X Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR⁶ oder -NR⁶R⁷,
n eine ganze Zahl zwischen 1 und 3, wobei n der Wertigkeit von M minus der Zahl 2 entspricht,
wobei
R⁶ und R⁷ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
R¹ bis R⁵ Wasserstoff, C₁- bis C₁₀-Alkyl, 5- bis 7gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder Si(R⁸)₃ mit
R⁸ C₁- bis C₁₀-Alkyl, C₃- bis C₁₀-Cycloalkyl oder C₆- bis C₁₅-Aryl,
Z für X oder 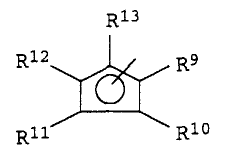 steht,
wobei die Reste
R⁹ bis R¹³ Wasserstoff, C₁- bis C₁₀-Alkyl, 5- bis 7gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder Si(R¹⁴)₃ mit
R¹⁴ C₁- bis C₁₀-Alkyl, C₆- bis C₁₅-Aryl oder
C₃- bis C₁₀-Cycloalkyl,
oder wobei die Reste R⁴ und Z gemeinsam eine Gruppierung -R¹⁵-A- bilden, in der
R¹⁵ 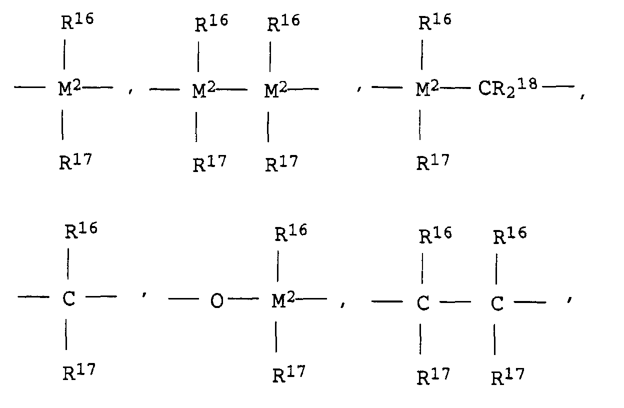 = BR¹⁶, = AlR¹⁶, -Ge-, -Sn-, -O-, -S-, = SO, = SO₂, = NR¹⁶, = CO, = PR¹⁶ oder = P(O)R¹⁶ ist,
wobei
R¹⁶, R¹⁷ und R¹⁸ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
M² Silicium, Germanium oder Zinn ist,
A ―O―, ―S―, 〉NR¹⁹ oder 〉PR¹⁹ bedeuten,
mit
R¹⁹ C₁- bis C₁₀-Alkyl, C₆- bis C₁₅-Aryl, C₃- bis C₁₀-Cycloalkyl, Alkylaryl oder Si(R²⁰)₃,
R²⁰ Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁴ und R¹² gemeinsam eine Gruppierung -R¹⁵- bilden.

3. Verfahren nach den Ansprüchen 1 bis 2, wobei die Komponente B) ein cyclisches oder offenkettiges Alkyl- oder Aryl-Alumoxan ist.

4. Verfahren nach den Ansprüchen 1 bis 3, dadurch gekennzeichnet, daß die Komponente D) ein gesättigter Kohlenwasserstoff ist.

5. Verfahren nach den Ansprüchen 1 bis 4, dadurch gekennzeichnet, daß man als Kohlenwaserstoffe mit einer C-C-Doppelbindung C₂- bis C₁₀-Alk-1-ene oder vinylaromatische Verbindungen verwendet.

6. Katalysatorsystem enthaltend:
A) einen Metallocenkomplex
B) einen Co-Katalysator
C) gegebenfalls eine Trägersubstanz und
D) eine inerte Organosiliciumverbindung.

7. Katalysatorsystem nach Anspruch 6, wobei das Gewichtsverhältnis der Summe der Komponeneten A), B) und gegebenfalls C) : D) im Bereich von 3: 1 bis 1 : 3 liegt.

8. Katalysatorsystem nach den Ansprüchen 6 bis 7, wobei die Komponente D) ein Molekulargewicht von mehr als 300 g/mol hat.

9. Verwendung von inerten Oranosiliciumverbindungen zur Herstellung von Katalysatorsystemen enthaltend
A) einen Metallocenkomplex
B) einen Co-Katalysator
C) gegebenfalls eine Trägersubstanz und
D) eine inerte Organosiliciumverbindung.
